Europäisches Patentamt

European Patent Office

Office européen des brevets

(19)

(11) Numéro de publication : **0 449 706 A1**

## (12) DEMANDE DE BREVET EUROPEEN

(21) Numéro de dépôt : **91400762.0**

(22) Date de dépôt : **21.03.91**

(51) Int. Cl.⁵ : **B65G 15/12, B65G 17/00, B65G 15/46, B65G 35/06**

(30) Priorité : **27.03.90 FR 9003872**

(43) Date de publication de la demande :
**02.10.91 Bulletin 91/40**

(84) Etats contractants désignés :
**AT BE CH DE ES FR GB IT LI LU NL SE**

(71) Demandeur : **SIETAM INDUSTRIES**
**42-48, avenue du Président Kennedy**
**F-91170 Viry Chatillon (FR)**

(72) Inventeur : **Crosnier, Jean-Claude**
**34, Voie Romaine**
**F-37540 Saint Cyr sur Loire (FR)**

(74) Mandataire : **Thibon-Littaye, Annick**
**Cabinet A. THIBON-LITTAYE 11 rue de l'Etang**
**F-78160 Marly-le-Roi (FR)**

(54) **Système de manutention d'objets.**

(57) La présente invention concerne un système de manutention du type comprenant au moins un dispositif de convoyage à rouleaux (220 à 270), caractérisé en ce que ledit dispositif comporte au moins une courroie de transport (30,31) ayant une face supérieure à surface portante pour une charge à transporter en contact avec elle par la surface de patins (10,11), et une face inférieure pourvue d'une pluralité de profils longitudinaux de section trapézoïdale (301 à 306) régulièrement répartis en section transversale de la courroie à l'opposé de toute la surface portante, lesdits profils (301 à 306) étant destinés à coopérer avec des gorges à sections complémentaires (2201 à 2206) ménagées dans lesdits rouleaux (220 à 270) sur lesquels porte ladite courroie (30,31).

EP 0 449 706 A1

Fig. 1

La présente invention concerne un système de manutention d'objets et notamment l'adaptation de courroies de transmission d'un tel système.

L'invention s'applique plus particulièrement à un système de manutention dans lequel les objets reposent sur les courroies par des surfaces constituant des patins ou par l'intermédiaire de supports tels que par exemple des luges reposant par des skis constituant des patins sur les courroies.

Il est connu de la demande de brevet FR-A-2 592 637 un système de manutention rapide sur luge dans lesquels un dispositif de convoyage à rouleaux crantés, disposés en porte-à-faux de part et d'autre de la ligne de convoyage entraîne des courroies qui comportent une partie centrale lisse de coopération avec lesdits rouleaux et des parties latérales crantées de chaque côté de la partie centrale lisse, destinées à coopérer avec les poulies motrices.

Dans ce type de réalisation, la partie d'entraînement constituée par les portions crantées de la courroie transversalement au sens de défilement n'est pas en contact avec les patins de la luge, tandis que la luge repose par ses patins sur la partie lisse de la courroie. Ceci présente l'inconvénient de créer des forces de cisaillement au niveau de la courroie, forces qui portent préjudice à la durée de vie du système de manutention. De plus, un tel système pose des problèmes de fabrication pour la courroie. Par ailleurs, dans un tel système, à cause des forces de cisaillement et des déplacements relatifs qui peuvent se produire entre la poulie d'entraînement et le patin de la luge, il est nécessaire d'adjoindre un dispositif de positionnement et d'arrêt à une position de travail déterminée à chaque poste de travail. Ceci rend donc plus complexe la réalisation matérielle du système de manutention.

Un premier but de l'invention est donc de simplifier le système de manutention, notamment au niveau de la réalisation de l'entraînement.

Selon sa caractéristique principale, la présente invention concerne un système de manutention du type comprenant au moins un dispositif de convoyage à rouleaux 220 à 270, caractérisé en ce que ledit dispositif comporte au moins une courroie de transport 30,31 ayant une face supérieure à surface portante pour une charge à transporter en contact avec elle par la surface de patins 10,11, et une face inférieure pourvue d'une pluralité de profils longitudinaux de section trapézoïdale 301 à 306 régulièrement répartis en section transversale de la courroie à l'opposé de toute la surface portante, lesdits profils 301 à 306 étant destinés à coopérer avec des gorges à sections complémentaires 2201 à 2206 ménagées dans lesdits rouleaux 220 à 270 sur lesquels porte ladite courroie 30,31.

Les patins peuvent être constitués soit par des surfaces d'objets à transporter posées directement sur les dispositifs de convoyage, soit par des surfaces de supports tels que palettes, montages d'usinage, luges ou autres. De tels patins réalisent avantageusement un report du poids de la charge sur la surface du patin en contact avec la surface portante de la courroie.

Les dispositifs de convoyage comporte de préférence deux séries de rouleaux, chacune des séries constituant un chemin de roulement pour un patin de la charge.

Le fait de prévoir que la courroie est munie de profils longitudinaux en saillie régulièrement répartis en regard de toute sa surface portante, permet notamment d'éviter un déchaussement de la courroie sous l'effet de la charge. Un tel système est particulièrement adapté à la manutention de charges importantes comme par exemple des carrosseries de véhicules.

Afin d'assurer une meilleure répartition du poids de la charge sur la courroie dans la direction de convoyage et d'éviter qu'elle n'ait à supporter des efforts trop importants dans les espaces entre deux rouleaux dans le sens de défilement, on s'assure de préférence que chaque patin repose en permanence, par l'intermédiaire de la courroie, sur trois rouleaux du dispositif de convoyage.

A cet effet, en fonction de la longueur des patins de la charge à transporter l'espace entre les axes de deux rouleaux voisins des chemins de roulement du dispositif de convoyage sera fixé de sorte que la longueur du patin soit au moins égale à trois fois cet espace. Pour la même raison on veillera, de préférence lors de la disposition des dispositifs de convoyage constituant le système les uns à la suite des autres, à ce que l'écartement entre deux dispositifs voisins dans le sens de convoyage, soit el que lors du transfert d'une charge de l'un à l'autre, celle-ci porte en permanence par l'intermédiaire des courroies, sur trois rouleaux.

Un autre but de l'invention est que la courroie soit conçue pour avoir une résistance suffisante à la traction et un contact non glissant avec le patin de la charge ou ski de la luge portant sur toute sa longueur sur la courroie.

Ce but est atteint par le fait que la courroie est formée d'une âme rigidifiante (par exemple des fibres à hautes caractéristiques connues sous la dénomination commerciale KEVLAR) calculée pour limiter le fluage sous les contraintes de traction et d'écrasement aux niveaux des rouleaux, surmoulée de caoutchouc pour assurer un contact non glissant avec le patin.

L'utilisation d'une âme rigidifiante permet notamment de pallier le risque de déchaussement de la courroie, sous l'effet d'une torsion des profils en saillie de cette courroie en augmentant la dureté de la courroie et en limitant sa compressibilité. L'emploi du KEVLAR pour constituer l'âme rigidifiante associé à un caoutchouc d'enrobage suffisamment dur et au maintien d'une tension minimum, dans la courroie permet d'éviter tout risque de déchaussement pendant le transfert des charges.

En effet, un tel système de manutention comprend généralement plusieurs dispositifs de convoyage à rouleaux appariés, placés les uns à la suite des autres, les charges passant d'un dispositif au suivant dans le sens de défilement.

Une telle âme rigidifiante contribue à la fois à faciliter la traction, notamment pour des systèmes rapides, et à assurer un bon support des charges.

Selon une autre particularité, la dureté minimum du caoutchouc est de 85 shore A.

Selon une autre particularité, la charge de la courroie, éventuellement constituée de la luge et des objets transportés, exerce un effort moyen de pression tangentielle pouvant atteindre 3000 N sur chaque rouleau.

Dans un mode de réalisation préféré, l'invention concerne un système de manutention d'objets à porter sur des luges, comportant des dispositifs de convoyages à rouleaux comportant au moins deux chemins de roulement disposés de part et d'autre de longerons centraux, les rouleaux de chaque dispositif étant pourvus d'une pluralité de gorges trapézoïdales destinées à recevoir une courroie ayant une pluralité de profils en saillie correspondant aux gorges, les courroies contribuant à l'entraînement et au support des luges de chaque côté des longerons de support.

Néanmoins selon des variantes de réalisation on peut prévoir des dispositifs de convoyage dont les rouleaux d'un chemin de roulement coopérant avec une courroie d'un côté des longerons centraux et d'un chemin de roulement à galets libres de l'autre côté, ou bien des chemins de roulement à galets libres de part et d'autre des longerons centraux et un chemin de roulement dont les rouleaux coopèrent avec une courroie entre les deux longerons centraux.

Le choix entre les différents modes de réalisation peut être lié au type de charge à transporter par exemple en fonction de leur poids ou de la répartition de leur poids.

Selon un autre mode de réalisation, le système de manutention comporte des dispositifs de convoyage à rouleaux pourvus de plus de deux chemins de roulement coopérant chacun par ses rouleaux avec une courroie selon l'invention, les chemins de roulement étant de préférence répartis dans la largeur du système en fonction de la répartition du poids de la charge à transporter.

Afin d'éviter, notamment dans des systèmes à luges, qu'un désalignement de la luge par rapport à la ligne de convoyage lors de son positionnement sur un dispositif de convoyage ou de son transfert d'un dispositif au suivant, ne soit préjudiciable à son convoyage, on prévoit avantageusement que des profilés de guidage latéral soient fixés sur les longerons centraux en ayant une surface de guidage parallèle aux chemins de roulement et en regard de la face latérale intérieure des patins côté la luge.

On autorise ainsi un guidage latéral de la luge en imposant que ses patins restent sur la surface portante des courroies.

Un autre but de l'invention est de contribuer à la simplification du système tout en assurant un positionnement précis de la charge dans la position de travail.

Ce but est atteint par le fait que l'épaisseur entre le fond des gorges constituées par les profils trapézoïdaux de la courroie et la surface de contact avec la charge est aussi faible que possible pour éliminer les différences de positionnement à l'arrêt.

Afin de pallier, lors d'un arrêt de la courroie portant la luge, à des écarts d'élongation de cette courroie sous l'effet de la charge qu'elle supporte, les patins de la charges activent avantageusement deux détecteurs de position par station d'arrêt, le premier assurant, par un dispositif de commande du moteur associé, un ralentissement de la vitesse à un certain seuil, le deuxième assurant l'arrêt avec une précision déterminée.

Ceci permet en outre d'éviter tout risque de déchaussement de la courroie lors de l'arrêt.

A chaque station d'arrêt souhaitée on prévoit donc une paire de détecteurs de position, on peut ainsi avoir plusieurs paires de détecteurs le long d'un même dispositif de convoyage.

On décrira maintenant plus en détails une forme de réalisation particulière de l'invention qui en fera mieux comprendre les caractéristiques essentielles et les avantages, étant entendu toutefois que cette forme de réalisation est choisie à titre d'exemple et qu'elle n'est nullement limitative. Sa description est illustrée par les dessins annexés dans lesquels :

– la figure 1 représente une vue latérale d'un dispositif de convoyage du système de manutention selon l'invention ;

– la figure 2 représente une vue en coupe transversale selon la ligne A-A' de la figure 1 ;

– les figures 3A à 3C représentent des vues en coupe de la courroie et des rouleaux d'entraînement ;

– et la figure 4 représente une vue en coupe transversale d'une variante de réalisation d'un dispositif de convoyage selon l'invention.

Sur ces figures les éléments correspondants sont désignés par les mêmes références. Les dimensions et proportions respectives de ces éléments peuvent ne pas être respectées pour une meilleure lisibilité des dessins.

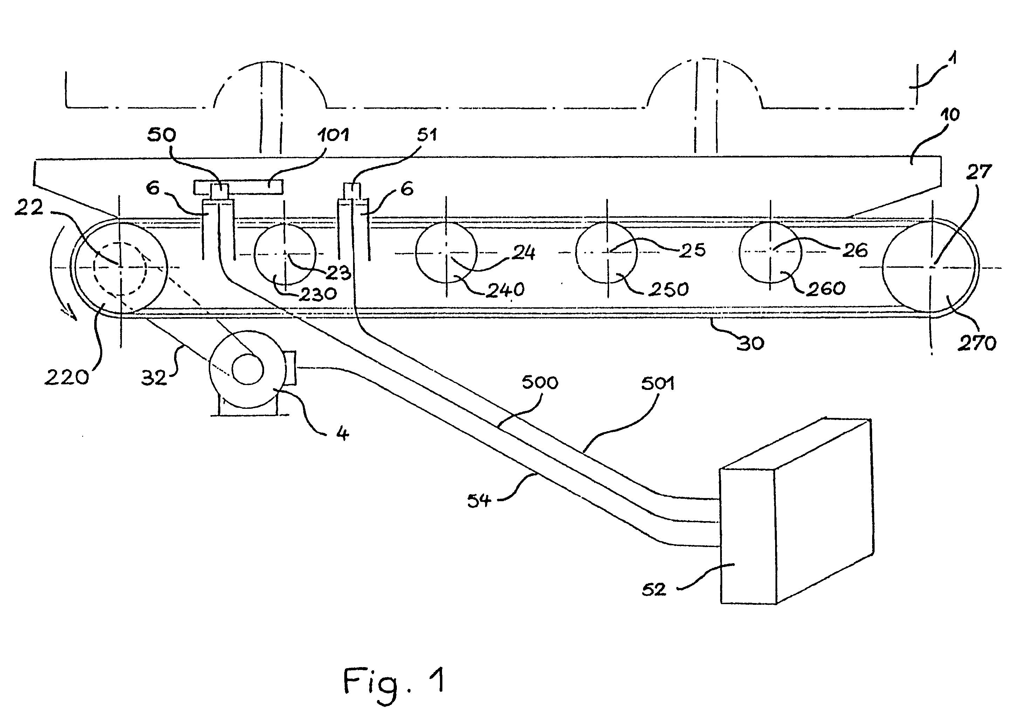

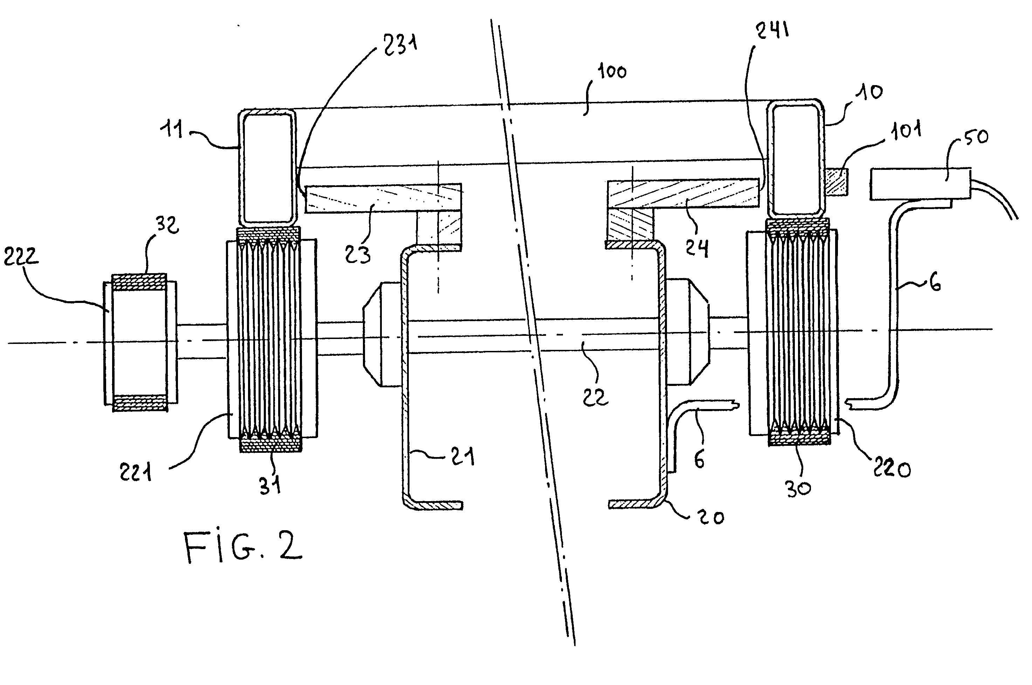

Le dispositif de convoyage des figures 1 et 2 est essentiellement constitué par une table à rouleaux comportant deux longerons 21,20 formant le chassis support, à section en forme de U. Dans ces longerons 21,20 sont montés en rotation, des axes d'entraînement 22 à 27 aux extrémités desquels sont montées en porte-à-faux, de chaque côté des longerons 20,21, des paires de rouleaux dont un seul 230,240,250,260 de chaque paire apparaît sur la figure à une des extrémités longitudinales des longerons, une paire de rouleaux 220,221 également en porte-à-faux de chaque côté des longerons, constituant des poulies d'entraînement destinées à assurer l'entraînement d'une courroie 30,31 placée de chaque côté du châssis sur les rouleaux et poulies correspondantes et une paire de rouleaux constituant des poulies de renvoi dont une seule 270 est représentée à l'autre extrémité des longerons. La paire de poulies 220,221 est entraînée par un moteur 4 à l'aide d'une chaîne ou courroie de transmission 32 associée à un pignon ou une poulie 222 montée sur le même axe 22 que la paire de poulies 221,220. Des patins ou skis longitudinaux 10,11 de la luge, reliés entre eux par des barres transversales 100 reposent sur les courroies 30,31 associées à chacun des chemins de roulement disposés de part et d'autre des longerons. Sur la luge, est monté, de façon connue, un châssis de véhicule 1 qui doit être amené successivement aux différents postes d'assemblage ou de fabrication. Un élément ou came 101 d'activation de détecteurs 50,51 est placé sur un des patins latéraux 10 de la luge.

Les détecteurs 50,51 sont disposés sur un rail 6 à proximité du passage du patin de luge lorsque celui-ci est entraîné en déplacement par les courroies 30,31. L'élément 101 peut être une rampe actionnant un contact jouant le rôle de détecteur 50 ou bien un élément métallique activant un capteur inductif, ou un contact magnétique, ou tout autre type de couple actionneur détecteur à faisceau lumineux, etc.

Sur chaque longeron 20,21 est fixé un élément longitudinal 24,23 de guidage latéral des patins 10,11 de la luge et dont la surface latérale externe 231, 241 constitue une surface de guidage propre à coopérer avec la face interne des patins 10,11 de la luge.

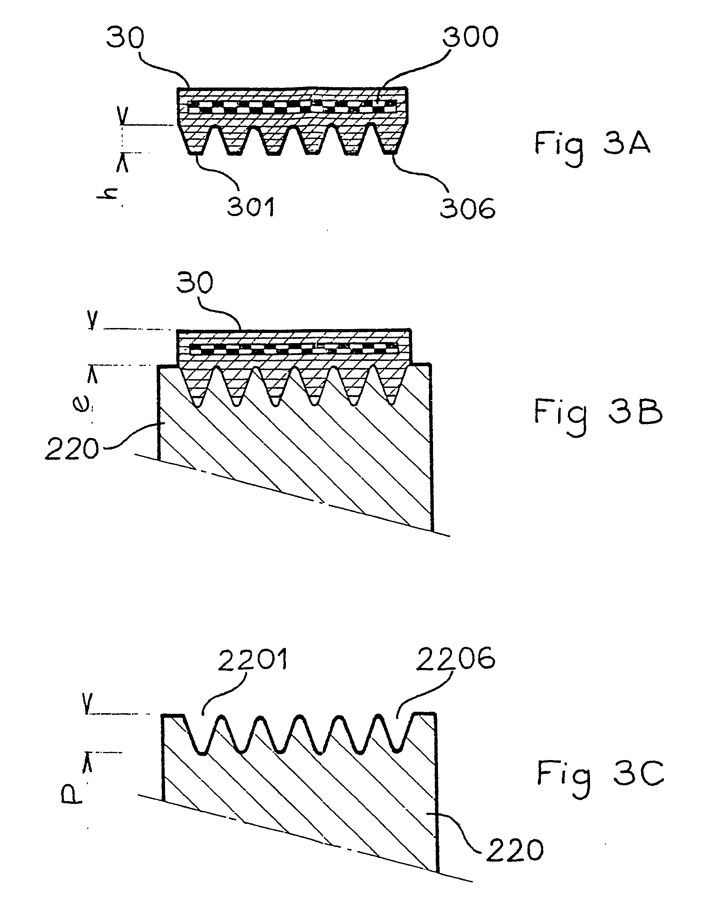

En référence aux figures 3A à 3C les courroies 30,31 sont constituées de manière avantageuse sous la forme d'une pluralité de profils trapézoïdaux 301 à 306 de hauteur h. Chaque courroie comporte une partie 300 en fibres à hautes caractéristiques pour assurer la résistance à la traction et aux déformations de la courroie. Cette partie 300 est surmoulée avec du caoutchouc de dureté minimum 85 shore A pour assurer un bon contact non glissant avec les skis de la luge d'une part, et d'autre part avec les gorges à profil trapèzoïdal correspondant prévues dans les poulies d'entraînement. Ainsi la poulie 220 associée à la courroie 30 comporte également une même pluralité de gorges 2201 à 2206 à profils trapèzoïdaux dont la profondeur P est légèrement plus élevée que la hauteur h des saillies de la courroie. On remarquera que cette courroie 30 a la particularité d'avoir une faible épaisseur e entre la partie supérieure qui est en contact avec le patin de luge et le fond des dents trapèzoïdales qui correspond à la surface supérieure de la poulie d'entraînement 220. Cette faible différence d'épaisseur permet ainsi de minimiser les différences de positionnement à l'arrêt puisque l'arrêt d'une luge est déterminé par l'arrêt en rotation du moteur, comme on le verra par la suite. Les rouleaux 230,240,250,260 ont un profil extérieur identique aux poulies 220,221 ; 270.

Pour simplifier la structure du système de manutention, un des patins d'une luge comporte un élément actionneur 101 lequel, lorsqu'il passe devant un premier détecteur 51 monté sur un rail 6 le long du chemin de déplacement du patin, envoie, par la liaison 510 un signal au boîtier de commande 52 qui assure, par l'intermédiaire de la liaison 54, la commande du moteur 4 d'entraînement du système de manutention. A la suite de ce signal, la vitesse de déplacement de la luge, commandée par la vitesse de rotation de l'axe 22 est diminuée jusqu'à un seuil déterminé. Lorsque l'actionneur 101 passe devant un deuxième détecteur 50 placé un peu plus loin que le premier détecteur 51 sur le chemin de la luge, celui-ci envoie, par la liaison 500, un deuxième signal au boîtier de commande qui permet, grâce à la vitesse de déplacement qui a été réduite entre les positions 51 et 50, d'assurer un positionnement de la luge à l'arrêt avec une précision de plus ou moins 1 mm. On comprend donc que par cette constitution simplifiée et par la constitution particulière des courroies du dispositif d'entraînement on a réussi à faire jouer à la courroie, à la fois le rôle d'entraînement, mais également le rôle de support de charge importante, tout en éliminant les risques d'étirage de la courroie lors du freinage ou les risques de déchaussement par création d'une vague de compression à l'avant de la luge suite à un freinage trop brusque. En même temps le compromis nécessaire pour obtenir une courroie ayant une dureté et une résistance au fluage suffisantes sans trop augmenter les différences de déplacement linéaire entre la surface en contact avec la luge et la surface en contact avec la poulie de renvoi a été obtenu, de façon à assurer un positionnement précis de la luge lors de son arrêt.

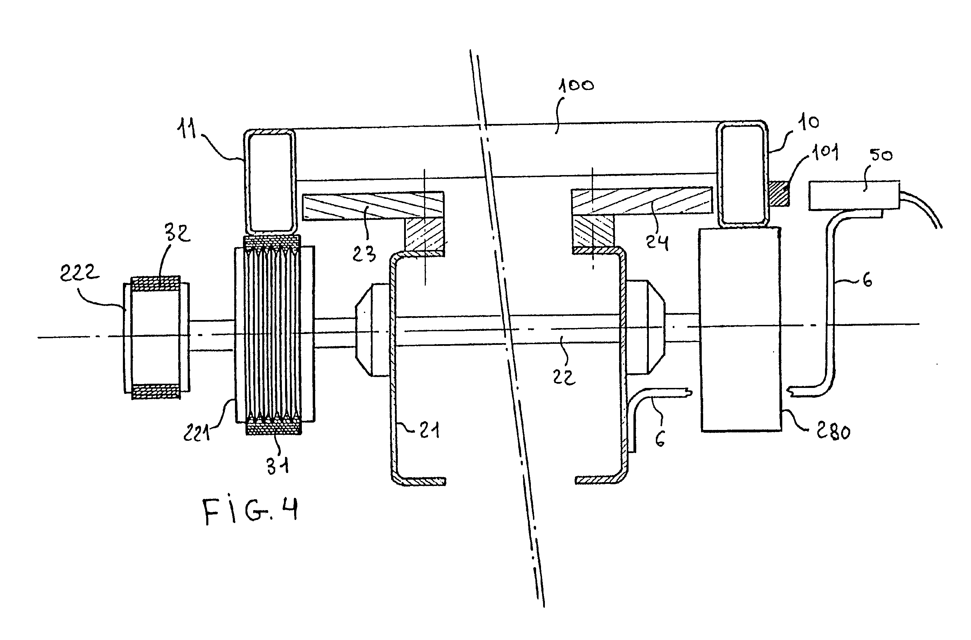

La variante représentée à la figure 4 montre un dispositif de convoyage dans lequel les rouleaux d'un des chemins de roulement sont remplacés par des galets libres 280 sur lesquels le patin 10 de la luge repose directement, l'entraînement étant dans ce cas assuré par le chemin de roulement muni de la courroie 31.

Naturellement l'invention n'est en rien limitée par les particularités spécifiées dans ce qui précède ou par les détails des modes de réalisation particuliers choisis pour illustrer l'invention. Toutes sortes de variantes peuvent être apportées aux réalisations particulières qui ont été décrites à titre d'exemples et à leurs éléments constitutifs sans pour autant sortir du cadre de l'invention. Cette dernière englobe ainsi tous les moyens constituant des équivalents techniques des moyens décrits ainsi que leur combinaison.

## Revendications

1. Système de manutention du type comprenant au moins un dispositif de convoyage à rouleaux (220 à 270), caractérisé en ce que ledit dispositif comporte au moins une courroie de transport (30,31) ayant une face supérieure à surface portante pour une charge à transporter en contact avec elle par la surface de patins (10,11), et une face inférieure pourvue d'une pluralité de profils longitudinaux de section trapézoïdale (301 à 306) régulièrement répartis en section transversale de la courroie à l'opposé de toute la surface portante, lesdits profils (301 à 306) étant destinés à coopérer avec des gorges à sections complémentaires (2201 à 2206) ménagées dans lesdits rouleaux (220 à 270) sur lesquels porte ladite courroie (30,31).

2. Système de manutention selon la revendication 1, caractérisé en ce que la courroie (30,31) est formée d'une âme rigidifiante (300) dimensionnée de sorte à limiter le fluage sous les contraintes de traction et d'écrasement aux niveaux des rouleaux (220 à 270), surmoulée de caoutchouc pour assurer un contact non glissant avec les patins (10,11) de la charge.

3. Système de manutention selon la revendication 2, caractérisé en ce que la dureté minimum du caoutchouc est de 85 shore A.

4. Système selon l'une quelconque des revendications 1 à 3, caractérisé en ce que l'épaisseur (e) entre le fond des gorges constituées par les profils trapézoïdaux de la courroie et la surface de contact avec la charge est aussi faible que possible pour diminuer la différence de positionnement lors d'un arrêt de la courroie.

5. Système selon l'une quelconque des revendications 1 à 4, caractérisé en ce que la charge de la courroie (30,31) exerce un effort moyen de pression tangentielle pouvant aller sur chaque rouleau jusqu'à 3000 N.

6. Système de manutention selon l'une quelconque des revendications 1 à 5, caractérisé en ce que l'écartement entre les axes (22 à 27) de deux rouleaux (220 à 270) voisins dans la direction du convoyage est telle que les patins (10,11) de la charge reposent en permanence, par l'intermédiaire de la courroie (30,31) sur au moins trois rouleaux.

7. Système de manutention selon l'une quelconque des revendications 1 à 6, caractérisé en ce que le dispositif de convoyage comporte en outre un chemin de roulement à galets libres (280), parallèle à un chemin de roulement dudit dispositif de convoyage dont les rouleaux (221 à 271) coopèrent avec la courroie (31), lesdits galets libres (280) contribuant au support de la charge également par la surface de patins ( 10 ).

8. Système de manutention selon l'une quelconque des revendications 1 à 7, caractérisé en ce que la charge est constituée d'objet (1) portés par des luges dont les skis constituent les patins ( 10, 11 ).

9. Système de manutention selon la revendication 8 d'objets à porter sur des luges, caractérisé en ce que ledit dispositif de convoyage comporte de part et d'autre de longerons contraux (20,21), au moins un chemin de roulement coopérant avec une courroie (30,31) munie de profils longitudinaux de section trapézoïdale (301 à 306).

10. Système de manutention selon la revendication 9, caractérisé en ce qu'il comporte des profilés (23,24) de guidage latéraux de la luge, fixés sur lesdits longerons centraux (20,21) et ayant, en regard de la face latérale interne des patins (10,11) de la luge, une surface de guidage (231,241) parallèle à la ligne de convoyage.

11. Système selon l'une quelconque des revendications 1 à 10, caractérisé en ce qu'il comporte au moins une paire de détecteurs (50,51) de position, placés sur le chemin de déplacement de la charge, un premier détecteur (51) assurant, par un dispositif (510,52,54) de commande du moteur associé (4), un ralentisssement de la vitesse à un certain seuil, un deuxième détecteur (50) assurant l'arrêt avec une précision déterminée, indépendamment du poids de la charge.

Fig. 1

FIG. 2

EP 0 449 706 A1

Fig 3A

Fig 3B

Fig 3C

FIG. 4

Office européen
des brevets

# RAPPORT DE RECHERCHE EUROPEENNE

Numero de la demande

EP 91 40 0762

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,Y | FR-A-2 592 637 (SOCIETE INDUSTRIELLE D'EQUIPMENT TECHNIQUE D'APPAREILS DE MANUTENTION) * Ensemble du document * | 1,2,8,9 | B 65 G 15/12 B 65 G 17/00 B 65 G 15/46 B 65 G 35/06 |
| A | --- | 11 | |
| Y | FR-A-2 531 934 (TRICOT) * Ensemble du document * --- | 1,2,8,9 | |
| A | CH-A- 659 757 (FABRIQUES D'EBAUCHES) * Ensemble du document * --- | 1-5 | |
| A | WO-A-8 900 524 (SIETAM SYSTEMES) * Ensemble du document * --- | 1,4,6,8 ,9,10 | |
| A | DE-A-3 601 699 (ROBERT BOSCH) * Ensemble du document * --- | 1,7 | |
| A | US-A-3 650 373 (KERN) * Ensemble du document * --- | 1 | |
| A | GB-A-2 074 969 (FORD MOTOR) * Figures * --- | 1 | DOMAINES TECHNIQUES RECHERCHES (Int. Cl.5) |
| A | DE-A-3 229 061 (RUHRKOHLE) * Figures * ----- | 1 | B 65 G |

Le présent rapport a été établi pour toutes les revendications

| Lieu de la recherche | Date d'achèvement de la recherche | Examinateur |
|---|---|---|
| LA HAYE | 03-07-1991 | OSTYN T.J.M. |